# EUROPEAN PATENT APPLICATION

(11) **EP 3 072 537 A1**
(43) Date of publication of application: **28.09.2016**
(21) Application number: 16161099.3
(22) Date of filing: 18.03.2016
(51) Int. Cl.: A61L 27/36

(54) **ORGAN PERFUSION METHOD AND ORGAN PERFUSION DEVICE**

(30) Priority: 27.03.2015 JP 2015067301
(71) Applicant: SYSMEX CORPORATION, Kobe-shi, Hyogo 651-0073 (JP)
(72) Inventor: Hori, Nobuyasu, Hyogo, 651-0073 (JP); Akama, Kenji, Hyogo, 651-0073 (JP)
(74) Representative: Hoffmann Eitle

(57) **Abstract**

Disclosed is an organ perfusion method including introducing a perfusion solution into an organ extracted from the living body and deriving the perfusion solution from the organ, wherein the organ and the perfusion solution are brought into contact with each other while applying oscillation to the organ.

## Description

### TECHNICAL FIELD

The present invention relates to an organ perfusion method and an organ perfusion device.

### BACKGROUND

In order to resolve the problem that there are not enough donors for organ transplant, which is growing into a serious problem, production of artificial organs is being considered. A mechanical artificial organ, an artificial organ in which cells are seeded in a decellularized organ (hereinafter also referred to as "decellularized artificial organ"), and the like have been proposed for the artificial organ. Among such artificial organs, a decellularized artificial organ has an advantage of having high biocompatibility. The method described in US 2013/109088, for example, is known for a method of decellularization of organs, and recellularization of the decellularized organs.

When decellularization of organs, recellularization of the decellularized organ, and the like are performed by perfusion of organs, a perfusion solution needs to be sufficiently diffused in the organs in order to efficiently perform the decellularization and the recellularization. It is an object of the present invention to provide an organ perfusion method and a device capable of sufficiently diffusing a perfusion solution in organs.

### SUMMARY OF THE INVENTION

One aspect of the present invention relates to an organ perfusion method including introducing a perfusion solution into an organ and deriving the perfusion solution from the organ, wherein the organ and the perfusion solution are brought into contact with each other while applying oscillation on the organ.

Another aspect of the present invention relates to an organ perfusion device including an organ accommodating container configured to accommodate an organ; a first flow path configured to introduce a perfusion solution into the organ accommodated in the organ accommodating container; a second flow path configured to derive the perfusion solution from the organ accommodated in the organ accommodating container; and an oscillation generating device configured to apply oscillation to the organ accommodated in the organ accommodating container, wherein the oscillation generating device applies the oscillation to the organ when the organ and the perfusion solution are brought into contact with each other.

The present invention can provide an organ perfusion method and device that can sufficiently diffuse a perfusion solution into an organ. This makes it possible to efficiently decellularize organs and recellularize the decellularized organs, and the like.

### BRIEF DESCRIPTION OF THE DRAWINGS

Fig. 1 is a schematic explanatory view showing a configuration of an organ perfusion device.
Fig. 2 is a step diagram showing a procedure when carrying out introduction of cells and recovery of cells.
Fig. 3 is a circuit diagram showing an operation state of a perfusion unit of the organ perfusion device when carrying out washing an organ.
Fig. 4 is a circuit diagram showing an operation state of the perfusion unit of the organ perfusion device when carrying out perfusion of an organ with a perfusion solution.
Fig. 5 is a circuit diagram showing an operation state of the perfusion unit of the organ perfusion device when carrying out introduction of cells into a first flow path.
Fig. 6 is a circuit diagram showing an operation state of the perfusion unit of the organ perfusion device when carrying out introduction of cells into an organ.
Fig. 7 is a circuit diagram showing an operation state of the perfusion unit of the organ perfusion device when carrying out culturing of cells.
Fig. 8 is a circuit diagram showing an operation state of the perfusion unit of the organ perfusion device when carrying out recovery of cells.
Fig. 9 is a circuit diagram showing an operation state of the perfusion unit of the organ perfusion device when carrying out washing of the device.
Fig. 10 is a schematic explanatory view showing a configuration of an organ perfusion device used in Examples 1, 2 and 4.
Fig. 11 is a schematic explanatory view showing a configuration of an organ perfusion device used in Comparative Examples 1 to 3.
Fig. 12A is a graph showing results based on the number of white blood cells in Example 1 and Comparative Example 1, Fig. 12B is a graph showing results based on the number of red blood cells in Example 1 and Comparative Example 1, and Fig. 12C is a graph showing results based on the number of blood platelets in Example 1 and Comparative Example 1.
Fig. 13A is a drawing-substituting photograph showing results of observing a temporal change in the spleen when perfusion is carried out while applying oscillation to the spleen in Example 2, and Fig. 13B is a drawing-substituting photograph showing results of observing a temporal change in the spleen when perfusion is carried out without applying oscillation to the spleen in Comparative Example 2.
Fig. 14 is a graph showing results of examining a relationship of the perfusion time and the proportion of the perfused area with respect to the area of the entire organ.
Fig. 15 is a schematic explanatory view showing a configuration of an organ perfusion device used in Example 3.
Fig. 16A is a graph showing results based on the number of white blood cells in Example 3 and Comparative Example 3, Fig. 16B is a graph showing results based on the number of red blood cells in Example 3 and Comparative Example 3, and Fig. 16C is a graph showing results based on the number of blood platelets in Example 3 and Comparative Example 3.
Fig. 17 is a graph showing results of examining the relationship of rotation speed and the ratio of the number of blood cells in Example 4.

### DETAILED DESCRIPTION OF THE PREFERRED EMBODIMENTS

### 1. Organ perfusion method

Organ perfusion means introducing a perfusion solution into an organ, and deriving the perfusion solution from the organ. The organ perfusion method of the present embodiment has a feature in that the organ and the perfusion solution are brought into contact with each other while applying oscillation to the organ.

An organ perfusion method according to the present embodiment can sufficiently diffuse a perfusion solution throughout an organ by bringing the organ and the perfusion solution into contact with each other while applying oscillation to the organ. The organ perfusion method according to the present embodiment can be used for applications such as (1) decellularization of an organ, (2) recellularization of the decellularized organ, (3) cell introduction into the organ, and (4) recovery of the cells from the organ.

The organ may be a solid organ or may be a hollow organ as long as it is an organ to be perfused. The solid organ to be perfused includes, for example, but is not particularly limited to, heart, liver, lung, spleen, pancreas, kidney, brain, bone, and the like. The hollow organ to be perfused includes, for example, but is not particularly limited to, small intestine, uterus, bladder, and the like. A supply source of the organ includes, for example, but is not particularly limited to, nonhuman animals such as swine, mice, chickens, rabbits, cows, sheep, and dogs. Either of a non-decellularized organ or a decellularized organ can be used according to the application described above.

The perfusion solution includes, for example, but is not particularly limited to, medium, organ presservation solution, normal saline solution, Ringer solution, Krebs-Ringer solution, and the like,. The medium includes, but is not particularly limited to, RPMI (Roswell Park Memorial Institute Medium), MEM (Minimum Essential Media), DMEM (Dulbecco's Modified Eagle Medium), Ham's F-12 medium, and the like. The organ presservation solution includes, but is not particularly limited to, extracellular liquid type presservation solutions such as Celsior solution, LPD (Low Potassium dextran) solution, and ET-Kyoto solution, and intracellular liquid type presservation solutions such as Euro-Collins solution and UW (University of Wisconsin) solution. The organ presservation solution may be an extracellular liquid type presservation solution or an intracellular liquid type presservation solution. The perfusion solution may contain an additive suited for maintaining cells such as blood plasma, blood serum, or amino acid, as needed.

In the case of the decellularization of an organ, the perfusion solution can contain a cell solubilizing agent. The cell solubilizing agent includes, for example, but is not particularly limited to, surface acting agents including an anionic surface acting agent such as dodecyl sodium sulfate, non-ionic surface acting agents such as polyoxyethylene (10) octylphenylether (trade name: Triton X-100), and the like; a proteolytic enzyme such as trypsin; a high molecular compound such as polyethyleneglycol, and the like,. In this case, the perfusion solution may further contain a nucleolytic enzyme such as endonuclease.

In the case of the recellularization of the decellularized organ or the cell introduction into the organ, the perfusion solution can contain cells. The perfusion solution containing medium can be used.

When using the organ perfusion method according to the present embodiment for the cell introduction into the organ, for example, undifferentiated cells can be used as cells. In the present specification, the term "undifferentiated cells" refers to cells that have not reached the terminal differentiation in the cell lineage. The undifferentiated cells include, for example, but are not particularly limited to, stem cells, precursor cells, and the like. The stem cells include, but are not particularly limited to, embryo-stem cells, MUSE cells (Multiliniage-differentiating Stress Enduring cells), iPS cells (induced pluripotent stem cells), mesenchymal stem cells, neural stem cells, epithelial stem cells, hepatic stem cells, germ stem cells, hematopoietic stem cells, skeletal stem cells, and the like. The precursor cells include, but are not particularly limited to, vascular endothelial precursor cells, blood platelet precursor cells, liver precursor cells, heart precursor cells, neuronal precursor cells, and the like. The blood platelet precursor cells includes, for example, but are not particularly limited to, megakaryocyte precursor cells, megakaryoblasts, promegakaryocytes, mature megakaryocytes, and the like. The liver precursor cells include, but are not particularly limited to, hepatoblast cells, hepatic precursor cells, hepatic stellate cells, hepatic stem precursor cells, and the like. The heart precursor cells include, but are not particularly limited to, myocardial precursor cells. The neuronal precursor cells include, but are not particularly limited to, neuron precursor cells, glial precursor cells, and the like. When using the undifferentiated cells as cells, the differentiation to the terminally differentiated cells can be attained by culturing the undifferentiated cells in the organ. In the present specification, the term "terminally differentiated cells" refers to cells that have reached the terminal differentiation in the cell lineage. The terminally differentiated cells include, for example, but are not particularly limited to, osteoblast cells, cartilage cells, adipose cells, liver cells, liver mesothelial cells, biliary epithelial cells, hepatic stellate cells, hepatic sinusoidal endothelial cells, Kupffer's cells, pit cells, vascular endothelial cells, intraductal epithelial cells, pancreatic ductal cells, acinar central cells, acinar cells, Langerhans' islet, cardiac muscle cells, fibroblast cells, smooth muscle cells, Type I pneumocytes, Type II pneumocytes, clara cells, ciliated epithelial cells, basal cells, goblet cells, neuroendocrine cells, kultschitzky cells, renal tubular epithelial cells, urothelial cells, columnar epithelial cells, glomerular epithelial cells, glomerular endothelial cells, podocytes, mesangial cells, nerve cells, astrocytes, microglia, oligodendrocytes, and the like.

In the case of the recellularization of the decellularized organ, the undifferentiated cells and/or terminally differentiated cells can be used as cells.

When introducing and deriving the perfusion solution into and from the organ, the organ is preferably immersed in a presservation solution. The presservation solution includes, but is not particularly limited to, an organ presservation solution, a normal saline solution, a Ringer solution, and the like. The organ presservation solution includes, for example, but is not particularly limited to, extracellular liquid type presservation solutions such as Celsior solution, LPD solution, and ET-Kyoto solution, and intracellular liquid type presservation solutions such as Euro-Collins solution and UW solution. The organ presservation solution may be the extracellular liquid type presservation solution or may be the intracellular liquid type presservation solution. The presservation solution may be a solution which is the same as the perfusion solution, or may be a solution different from the perfusion solution.

In the present specification, the term "oscillation" includes oscillating an organ itself by directly applying an external force to the organ itself, and indirectly oscillating the organ by oscillating the presservation solution surrounding the organ immersed in the presservation solution or a container containing the organ. A shaker, an ultrasonic wave generator, or the like can be used to oscillate the organ. A commercially available shaker or ultrasonic wave generator can be used. An example of the shaker includes a laboratory shaker SRR-2 manufactured by As One Corporation. Examples of the ultrasonic wave generator include USK series manufactured by As One Corporation. The oscillation of the organ also includes applying a force to the organ by hand, and the like. The concept of "oscillation" in the present specification does not include unintended oscillation of the organ caused by the normal perfusion.

When causing the organ to oscillate by means of the shaker, the rotation speed of the shaker is preferably greater than or equal to 50 rpm, and more preferably greater than or equal to 100 rpm in terms of spreading and sufficiently diffusing the perfusion solution throughout the entire organ. The rotation speed of the shaker is preferably smaller than or equal to 500 rpm, and more preferably smaller than or equal to 400 rpm in terms of suppressing leakage of the presservation solution to the exterior of the organ accommodating container, preventing damage of the organ, and the like. The amplitude of the shaker is preferably greater than or equal to 10 mm, and more preferably greater than or equal to 25 mm in terms of spreading and sufficiently diffusing the perfusion solution throughout the entire organ. The amplitude of the shaker is preferably smaller than or equal to 100 mm, and more preferably smaller than or equal to 75 mm in terms of maintaining the function of the organ in a satisfactory state. The oscillating direction of the shaker may be any one of front and back direction, left and right direction, or rotating direction with the bottom surface of the shaker as a reference. When causing the organ to oscillate by means of the ultrasonic wave generator, the frequency of the ultrasonic wave is preferably greater than or equal to 20 kHz in terms of spreading and sufficiently diffusing the perfusion solution throughout the entire organ. The frequency of the ultrasonic wave is preferably smaller than or equal to 50 kHz in terms of maintaining the function of the organ in a satisfactory state. Other than the shaking by the shaker and the shaking by the ultrasonic wave, the organ may be oscillated by filling the container for storing the organ with presservation solution and stirring the presservation solution using a stirrer, and the like.

In the present specification, the phrase "contact of organ and perfusion solution" includes a state of the organ and the perfusion solution while perfusion is being carried out, and a state of the organ and the perfusion solution when the perfusion is temporarily stopped after introducing the perfusion solution into the organ.

The organ can be washed with a washing solution prior to the contact of the organ and the perfusion solution according to the application and the like of the organ perfusion method of the present embodiment. The washing solution includes, but is not particularly limited to, the above-described organ presservation solution, normal saline solution, Ringer solution, Krebs-Ringer solution, and the like. The washing of the organ is the step of introducing the washing solution into the organ through a blood vessel, and deriving the washing solution from the organ through the blood vessel. For example, hemocyte cells and the like existing in the organ can be removed from the organ by washing the organ.

The flow rate of the washing solution is, for example, preferably greater than or equal to 0.01 mL/minute, and more preferably greater than or equal to 0.1 mL/minute in terms of sufficiently washing the organ. The flow rate of the washing solution is preferably smaller than or equal to 100 mL/minute, and more preferably smaller than or equal to 20 mL/minute in terms of preventing damage of the organ. The washing time of the organ is, for example, but not particularly limited to, 1 to 3000 minutes, preferably 15 to 1500 minutes, more preferably 60 to 1000 minutes, further preferably 100 to 800 minutes, and particularly preferably 200 to 600 minutes.

The flow rate of the perfusion solution should be a flow rate generally used in the perfusion of the organ. The flow rate of the perfusion solution is, for example, preferably greater than or equal to 0.01 mL/minute, and more preferably greater than or equal to 0.1 mL/minute in terms of stably introducing the perfusion solution into the organ through a tube or a blood vessel. The flow rate of the perfusion solution is preferably smaller than or equal to 100 mL/minute, and more preferably smaller than or equal to 20 mL/minute in terms of maintaining the function of the organ in a satisfactory state.

The temperature of the perfusion solution when the organ and the perfusion solution are brought into contact with each other is, for example, but not particularly limited to, 4 to 40°C, and preferably 4 to 25°C in the case of decellularization of the organ. When introducing cells into the organ, the temperature is, but not particularly limited to, 4 to 40°C, and preferably 20 to 38°C. The temperature of the organ when the organ and the perfusion solution are brought into contact with each other is, for example, but not particularly limited to, 4 to 40°C, and preferably 4 to 25°C in the case of decellularization of the organ. When introducing cells into the organ, the temperature is, but not particularly limited to, 4 to 40°C, and preferably 20 to 38°C.

The contacting time of the perfusion solution and the organ can, for example, be appropriately determined according to the application and the like of the organ perfusion method according to the present embodiment.

The outline of a procedure of the organ perfusion method according to the present embodiment will be hereinafter described for each application.

### (1) Decellularization

The term "decellularization" refers to detaching some of or all of cells of an organ from the organ by organ perfusion. The decellularization of the organ can be carried out, for example, by introducing a perfusion solution containing a cell solubilizing agent into the organ and bringing the perfusion solution and the organ into contact with each other.

The contacting time of the perfusion solution and the organ is preferably longer than or equal to 60 minutes, and more preferably longer than or equal to 120 minutes in terms of spreading and sufficiently diffusing the perfusion solution throughout the entire organ. The upper limit of the contacting time of the perfusion solution and the organ can be appropriately determined according to, for example, the type of organ, the size of organ, the degree of decellularization, and the like. In the present specification, the contacting time of the perfusion solution and the organ in decellularization is the sum of the time to perfuse the organ with the perfusion solution used for decellularization.

The decellularized organ can be checked, for example, according to (A1), (B1), (C1), and the like below:
(A1) dye a tissue section of the obtained organ histologically, and examine the presence of detectable cells and maintaining of a structure constituted from an extracellular matrix;
(B1) examine change in color of the obtained organ;
(C1) examine expression level of gene in the obtained organ.

### (2) Recellularization

The term "recellularization" refers to introducing cells into the decellularized organ, and engrafting the introduced cells at a part of or the entire decellularized organ. The recellularization of the decellularized organ can be carried out, for example, through the following steps and the like. First, cells are introduced into the decellularized organ. Thereafter, culturing is carried out. This makes it possible to carry out the recellularization of the decellularized organ. The introduction of the cells into the organ is carried out, for example, through the following methods (2-1), (2-2), (2-3), and the like:
(2-1) perfuse the organ with a perfusion solution containing cells;
(2-2) after perfusion with a perfusion solution not containing cells, perfuse the organ with a perfusion solution containing cells:
(2-3) after perfusion with a perfusion solution not containing cells, stop the perfusion to introduce cells into the perfusion system and perfuse the organ along with a perfusion solution containing medium.

The contacting time of the perfusion solution and the organ is preferably longer than or equal to 5 minutes, and more preferably longer than or equal to 20 minutes in terms of spreading and sufficiently diffusing the perfusion solution throughout the entire organ. The upper limit of the contacting time of the perfusion solution and the organ can be appropriately determined, for example, according to the type of organ, the degree of recellularization, and the like. In the present specification, the contacting time of the perfusion solution and the organ in recellularization refers to (I), (II), or (III). (I) The sum of a perfusion time B1 to perfuse the organ with the perfusion solution containing cells, a perfusion time C1 to perfuse the organ with the perfusion solution containing medium, and a culturing time D1 to carry out culturing (perfusion time B1 + perfusion time C1 + culturing time D1). (II) The sum of a perfusion time A2 to perfuse the organ with the perfusion solution not containing cells, a time B2 to perfuse the organ with the perfusion solution containing cells, a perfusion time C2 to perfuse the organ with the perfusion solution containing medium, and a culturing time D2 to carry out perfusion culturing (perfusion time A2 + perfusion time B2 + perfusion time C2 + culturing time D2). (III) The sum of a perfusion time A3 to perfuse the organ with the perfusion solution not containing cells, a stop time B3 to stop the perfusion and introduce cells into the perfusion system, a perfusion time C3 to perfuse the organ with the perfusion solution containing medium, and a culturing time D3 to carry out culturing (perfusion time A3 + stop time B3 + perfusion time C3 + culturing time D3).

The perfusion time B1 should be a time sufficient to spread the perfusion solution containing cells throughout the entire organ and diffuse the cells contained in the perfusion solution. The perfusion time B1 is, for example, preferably longer than or equal to 1 minute, and more preferably longer than or equal to 5 minutes. The perfusion time C1 should be a time sufficient to spread the perfusion solution containing medium throughout the entire organ and diffuse the medium contained in the perfusion solution. The perfusion time C1 is, for example, preferably longer than or equal to 1 minute, and more preferably longer than or equal to 10 minutes. The culturing time D1 should be a time sufficient to bond the cells to the decellularized organ. The culturing time D1 is, for example, preferably longer than or equal to 30 minutes, more preferably greater than or equal to 1 hour, and most preferably longer than or equal to 3 hours. The perfusion time A2 is, for example, preferably longer than or equal to 1 minute, and more preferably longer than or equal to 10 minutes. The perfusion time B2 is similar to the perfusion time B1. The perfusion time C2 is similar to the perfusion time C 1. The culturing time D2 is similar to the culturing time D 1. The perfusion time A3 is similar to the perfusion time A2. The stop time B3 should be a time sufficient to introduce the cells into the perfusion system. The stop time B3 is, for example, preferably shorter than or equal to 10 minutes, more preferably shorter than or equal to 5 minutes, and most preferably shorter than or equal to 1 minute. The timing to stop the perfusion solution may be the same time as the start of introduction of the cells into the perfusion system, or may be after elapse of a predetermined time from the start of introduction of the cells into the perfusion system. The predetermined time is, for example, preferably 0.01 to 1000 seconds, and more preferably 0.1 to 100 seconds. The perfusion time C3 should be a time sufficient to spread the cells throughout the entire organ and diffuse the cells. The perfusion time C3 is, for example, preferably longer than or equal to 1 minute, and more preferably longer than or equal to 10 minutes. The culturing time D3 is similar to the culturing time D2.

The recellularized organ can be checked, for example, according to (A2), (B2), (C2), (D2), and the like below:
(A2) dye a tissue section of the obtained organ histologically, and examine the presence of detectable cells;
(B2) examine change in color of the obtained organ;
(C2) examine expression level of gene in the obtained organ;
(D2) examine expression level of protein in the obtained organ.

### (3) Cell introduction into organ

In the present specification, the "cell introduction into the organ" refers to introduction of predetermined cells into a non-decellularized organ. The "non-decellularized organ" refers to herein an intact organ or an organ in which a part of or the entire organ is recellularized. The intact organ refers to herein an organ that is not subjected to substantially any treatment after being extracted from the living body. For example, the "intact organ" referred to herein includes an organ from which blood and the like attached to the organ after the extraction are washed off. The cells to be introduced include, for example, but are not particularly limited to, undifferentiated cells and terminally differentiated cells.

When the cells to be introduced are undifferentiated cells, the undifferentiated cells introduced into the organ are differentiated. Therefore, cells after differentiation, products of the differentiated cells, and both of these are obtained. When the undifferentiated cells are megakaryocytic precursor cells, the megakaryocytic precursor cells are, for example, introduced into the organ such as the spleen. In this case, the megakaryocytic precursor cells are differentiated to megakaryocytes. The megakaryocytes produce blood platelets. Therefore, blood platelets are obtained.

The cell introduction into the organ can be carried out, for example, by introducing cells into the organ and culturing the same. The introduction of the cells into the organ is carried out, for example, through the following methods (3-1), (3-2), (3-3), and the like:
(3-1) perfuse the organ with a perfusion solution containing cells;
(3-2) after perfusion with a perfusion solution not containing cells, perfuse the organ with a perfusion solution containing cells:
(3-3) after perfusion with a perfusion solution not containing cells, stop the perfusion to introduce cells into the perfusion system and perfuse the organ along with a perfusion solution containing medium.

The contacting time of the perfusion solution and the organ is preferably longer than or equal to 60 minutes, more preferably longer than or equal to 120 minutes, and further preferably longer than or equal to 180 minutes in terms of spreading and sufficiently diffusing the perfusion solution throughout the entire organ. The upper limit of the contacting time of the perfusion solution and the organ can be appropriately determined, for example, according to the type of target cells, the size of organ, and the like. In the present specification, the contacting time of the perfusion solution containing cells and the organ refers to (IV), (V), or (VI). (IV) The sum of a perfusion time B4 to perfuse the organ with the perfusion solution containing cells, a perfusion time C4 to perfuse the organ with the perfusion solution containing medium, and a culturing time D4 to carry out culturing (perfusion time B4 + perfusion time C4 + culturing time D4), (V) the sum of a perfusion time A5 to perfuse the organ with the perfusion solution not containing cells, a perfusion time B5 to perfuse the organ with the perfusion solution containing cells, a perfusion time C5 to perfuse the organ with the perfusion solution containing medium, and a culturing time D5 to carry out culturing (perfusion time A5 + perfusion time B5 + perfusion time C5 + culturing time D5), or (VI) the sum of a perfusion time A4 to perfuse the organ with the perfusion solution not containing cells, a stop time B4 to stop the perfusion and introduce cells into the perfusion system, a perfusion time C4 to perfuse the organ with the perfusion solution containing medium, and a culturing time D4 to carry out culturing (perfusion time A4 + stop time B4 + perfusion time C4 + culturing time D4).

The perfusion time B4 should be a time sufficient to spread the perfusion solution containing cells throughout the entire organ and diffuse the cells contained in the perfusion solution. The perfusion time C4 should be a time sufficient to spread the perfusion solution containing medium throughout the entire organ and diffuse the medium contained in the perfusion solution. The perfusion time C4 is, for example, preferably longer than or equal to 5 minutes, and more preferably longer than or equal to 15 minutes. The culturing time D4 is determined according to the type of organ and the type of cell. The culturing time D4 is, for example, preferably longer than or equal to 1 hour, more preferably greater than or equal to 2 hours, and further preferably longer than or equal to 3 hours. The perfusion time A5 is, for example, preferably longer than or equal to 10 minutes, and more preferably longer than or equal to 30 minutes. The perfusion time B5 is similar to the perfusion time B4. The perfusion time C5 is similar to the perfusion time C4. The culturing time D5 is similar to the culturing time D4. The perfusion time A6 is similar to the perfusion time A5. The stop time B6 should be a time sufficient to introduce the cells into the perfusion system. The stop time B6 is, for example, preferably shorter than or equal to 10 minutes, and more preferably shorter than or equal to 5 minutes. The timing to stop the perfusion solution may be the same time as the start of introduction of the cells into the perfusion system, or may be after elapse of a predetermined time from the start of introduction of the cells into the perfusion system. The predetermined time is, for example, preferably 0.01 to 1000 seconds, and more preferably 0.1 to 100 seconds. The perfusion time C6 is similar to the perfusion time C5. The culturing time D6 is similar to the culturing time D5.

### (4) Recovery of cells from organ

The cells from the organ can be recovered, for example, through the following steps. The perfusion solution is introduced into the organ, and the specific cells-containing perfusion solution derived out from the organ is recovered.

The contacting time of the perfusion solution and the organ is preferably longer than or equal to 1 minute, and more preferably longer than or equal to 10 minutes in terms of recovering greater amount of cells. The upper limit of the contacting time of the perfusion solution and the organ can be appropriately determined, for example, according to the type of organ, the size of organ, the type of cells to be recovered, and the like. In the present specification, the contacting time of the perfusion solution and the organ when recovering cells from the organ is the sum of the time to perfuse the organ with the perfusion solution used to recover the cells from the organ.

The recovery of the cells can be carried out, for example, through the following steps. The cells are separated from the perfusion solution derived out from the organ. The separation of the cells from the perfusion solution can be carried out, for example, by centrifugal separation or the like. Specific cells are then acquired from the separated cells. The acquisition of the specific cells from the separated cells can be carried out by affinity chromatography using a substance that specifically bonds to the specific cells, for example, an antibody or the like, by cell sorting with fluorescence staining, or the like.

The type of the cells recovered can be checked, for example, by examining the expression of marker of the recovered cells, examining the shape of the recovered cells, examining the function of the recovered cells, and the like.

### 2. Organ perfusion device

### [Configuration of organ perfusion device]

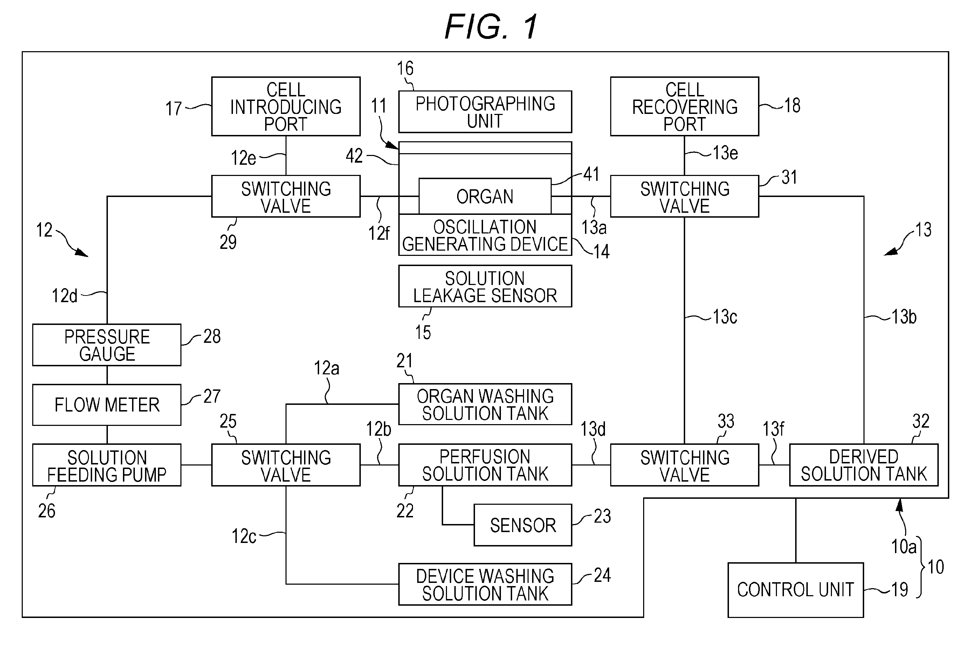

An organ perfusion device according to the present embodiment will be hereinafter described in detail with reference to the accompanying drawings. The organ perfusion device according to the present embodiment can be used in the organ perfusion method described above. An organ perfusion device 10 shown in Fig. 1 includes a perfusion unit 10a and a control unit 19. The perfusion unit 10a includes an organ accommodating container 11, a first flow path 12 for introducing a perfusion solution into an organ 41, a second flow path 13 for deriving the perfusion solution from the organ 41, and an oscillation generating device 14 for applying oscillation to the organ 41. In the present embodiment, the perfusion unit 10a includes a solution leakage sensor 15, a photographing unit 16, a cell introducing port 17, and a cell recovering port 18.

The organ accommodating container 11 is a container that accommodates the organ 41 to be perfused and a presservation solution 42 for the organ 41. The organ accommodating container 11 may be an open type container including an opening or may be a sealable container. The capacity of the organ accommodating container 11 should have a capacity sufficient to accommodate the organ 41 and the presservation solution 42. The capacity of the organ accommodating container 11 is preferably greater than the total volume of the organ 41 and the presservation solution 42 in terms of suppressing solution leakage from the organ accommodating container 11 when applying oscillation to the organ 41. Normally, the capacity of the organ accommodating container 11 is preferably greater than or equal to 1.2 times, and more preferably greater than or equal to 5 times the total volume of the organ 41 and the presservation solution 42. The upper limit of the capacity of the organ accommodating container 11 can be appropriately set according to the size required to the organ perfusion device 10, the size of organ, and the like. The organ 41 and the presservation solution 42 accommodated in the organ accommodating container 11 are maintained at a predetermined temperature. Therefore, the organ accommodating container 11 may be disposed in an incubator that can maintain a predetermined temperature, or may have an outer periphery covered with a heat retention unit that can maintain a predetermined temperature. The organ 41 and the presservation solution 42 accommodated in the organ accommodating container 11 are maintained at a predetermined carbon dioxide concentration. Therefore, the organ accommodating container 11 may be disposed in an incubator that can maintain a predetermined carbon dioxide concentration.

The first flow path 12 is a flow path for transporting an organ washing solution, a perfusion solution, or a device washing solution. When the organ 41 is accommodated in the organ accommodating container 11, the first flow path 12 is connected to the organ 41 in the organ accommodating container 11. In this case, the first flow path 12 functions as a flow path for introducing an organ washing solution or a perfusion solution into the organ 41. When the organ 41 is not accommodated in the organ accommodating container 11, the first flow path 12 is connected to the organ accommodating container 11. In this case, the first flow path 12 functions as a flow path for introducing a device washing solution into the organ accommodating container 11. The first flow path 12 includes an organ washing solution tank 21, a perfusion solution tank 22, a sensor 23, a device washing solution tank 24, a solution feeding pump 26, a flow meter 27, a pressure gauge 28, and switching valves 25, 29. The organ washing solution tank 21, the perfusion solution tank 22, and the device washing solution tank 24 are connected to the switching valve 25 by way of flow paths 12a, 12b, 12c. The switching valves 25, 29 include, but are not particularly limited to, an electromagnetic valve and the like.

The organ washing solution tank 21 contains a washing solution for washing organ. The perfusion solution tank 22 contains a perfusion solution. The perfusion solution tank 22 includes the sensor 23. The sensor 23 measures the state of the perfusion solution, for example, pH, temperature, dissolved oxygen amount, and the like of the perfusion solution in the perfusion solution tank 22. The device washing solution tank 24 contains a washing solution for washing flow paths 12a, 12b, 12c, 12d, 12e, 12f, 13a, 13b, 13c, 13d, 13e, 13f, the sensor 23, switching valves 25, 29, 31, 33, and the like in the device.

The solution feeding pump 26, the flow meter 27, and the pressure gauge 28 are provided in the middle of the flow path 12d in the downstream of the switching valve 25. The solution feeding pump 26 feeds the organ washing solution in the organ washing solution tank 21, the perfusion solution in the perfusion solution tank 22, or the device washing solution in the device washing solution tank 24. The flow meter 27 measures the flow rate of the organ washing solution, the perfusion solution, or the device washing solution in the flow path 12d. The pressure gauge 28 measures the pressure applied to a tube in the flow path 12d and the organ. The switching valve 29 is connected to the downstream of the flow path 12d. The switching valve 29 is connected to the flow path 12e and the flow path 12f. The flow path 12e is connected to the cell introducing port 17. The flow path 12f is passed through the organ accommodating container 11. When the organ 41 is accommodated in the organ accommodating container 11, the flow path 12f is connected to the organ 41.

The second flow path 13 is a flow path for transporting the organ washing solution, the perfusion solution, or the device washing solution. When the organ 41 is accommodated in the organ accommodating container 11, the second flow path 13 is connected to the organ 41 in the organ accommodating container 11. In this case, the second flow path 13 functions as a flow path for deriving the organ washing solution or the perfusion solution from the organ 41. When the organ 41 is not accommodated in the organ accommodating container 11, the second flow path 13 is connected to the organ accommodating container 11. In this case, the second flow path 13 functions as a flow path for deriving the device washing solution from the organ accommodating container 11. The second flow path 13 includes switching valves 31, 33 and a derived solution tank 32. The switching valves 31, 33 include, but are not particularly limited to, an electromagnetic valve and the like. The switching valve 31 is connected to flow paths 13a, 13b, 13c, 13e. The derived solution tank 32 is connected to the downstream of the flow path 13b. The switching valve 33 is connected to the downstream of the flow path 13c. The switching valve 33 is connected to the derived solution tank 32 by way of the flow path 13f and to the perfusion solution tank 22 by way of the flow path 13d. The flow path 13e is connected to the cell recovering port 18.

The oscillation generating device 14 generates oscillation to apply oscillation to the organ 41 in the organ accommodating container 11. The oscillation generating device 14 includes, for example, but is not particularly limited to, a shaker for shaking the organ accommodating container 11, an ultrasonic wave generating device for applying an ultrasonic wave to the presservation solution contained in the organ accommodating container 11, and the like. The oscillation generating device 14 may be formed integrally with the organ accommodating container 11, or may be disposed separately from each other.

The solution leakage sensor 15 monitors the presence or absence of leakage of the presservation solution from the organ accommodating container 11. The solution leakage sensor 15 may be provided on the outer periphery of the organ accommodating container 11, or may be provided distant from the organ accommodating container 11 within a range where the presence or absence of the leakage of the presservation solution can be monitored.

The photographing unit 16 monitors the change in state of the organ 41. The photographing unit 16 can be installed at a position where the organ 41 in the organ accommodating container 11 can be monitored.

The control unit 19 is connected to the perfusion unit 10a. The control unit 19 can control the operation of the solution feeding pump 26 based on the information on the presence or absence of solution leakage obtained with the solution leakage sensor 15, the information on the state of the organ obtained with the photographing unit 16, the information on the flow rate obtained with the flow meter 27, the information on the pressure in the flow path obtained with the pressure gauge 28, and the like. The control unit 19 can control the switching valves 25, 29, 31, 33 according to the procedure of the organ perfusion method.

### [Operation of organ perfusion device]

Next, the operation of the organ perfusion device according to the present embodiment will be described in detail with reference to the accompanying drawings. The case where the organ perfusion device according to the present embodiment is used for introduction of cells into the organ and for recovery of the cells will be hereinafter described as an example, but the operation of the organ perfusion device is not limited thereto.

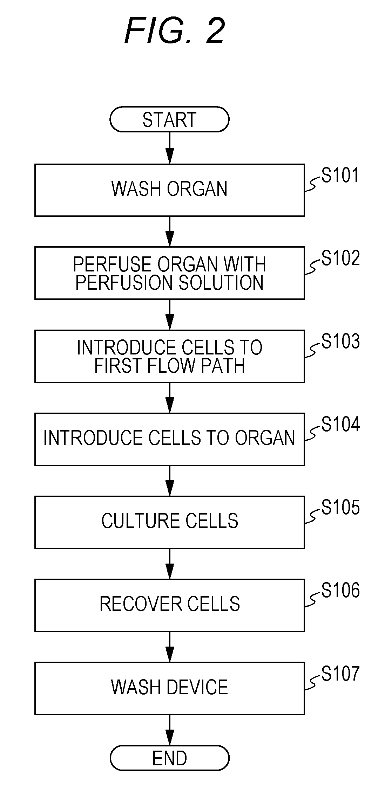

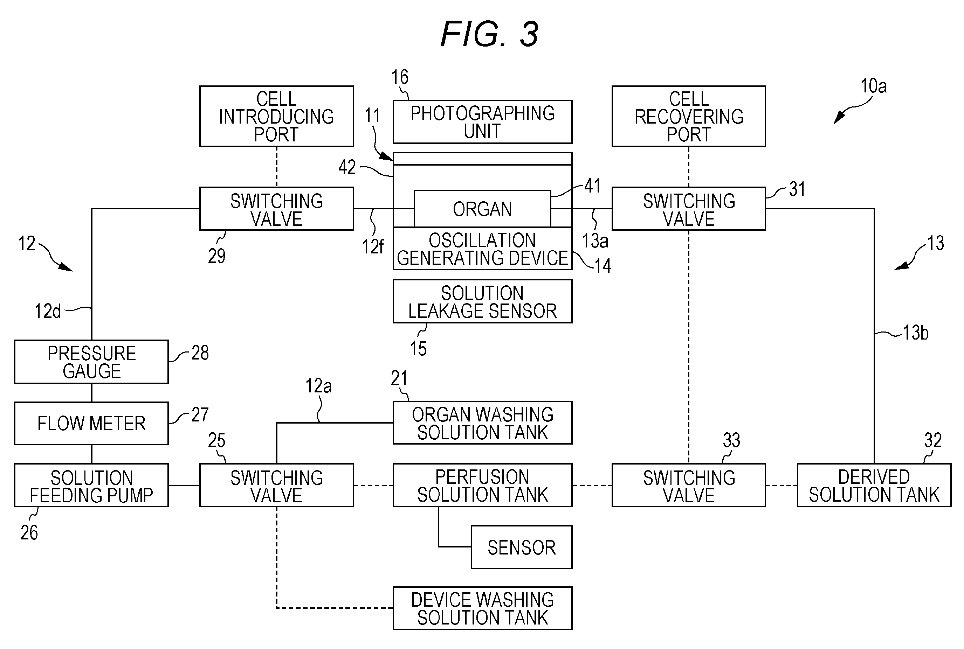

The washing of the organ is carried out in step S101 of Fig. 2. In step S101, as shown in Fig. 3, the flow path 12a connected to the organ washing solution tank 21 is connected to the flow path 12d by way of the switching valve 25. The flow path 12d and the flow path 12f are connected by way of the switching valve 29. The flow path 12f is connected to the artery of the organ 41 accommodated in the organ accommodating container 11. The flow path 13a is connected to the vein of the organ 41 accommodated in the organ accommodating container 11. The flow path 13a and the flow path 13b are connected by way of the switching valve 31. Thus, with the solution feeding pump 26, the organ washing solution in the organ washing solution tank 21 is introduced into the organ 41 through the first flow path 12, and derived out from the organ through the second flow path 13. In this case, the flow rate of the organ washing solution and the pressure in the flow path are monitored by the flow meter 27 and the pressure gauge 28. In step S101, the oscillation generating device 14 applies oscillation to the organ 41 in the organ accommodating container 11. Thus, the washing solution can be spread throughout the entire organ 41, and blood cells in the organ can be sufficiently removed.

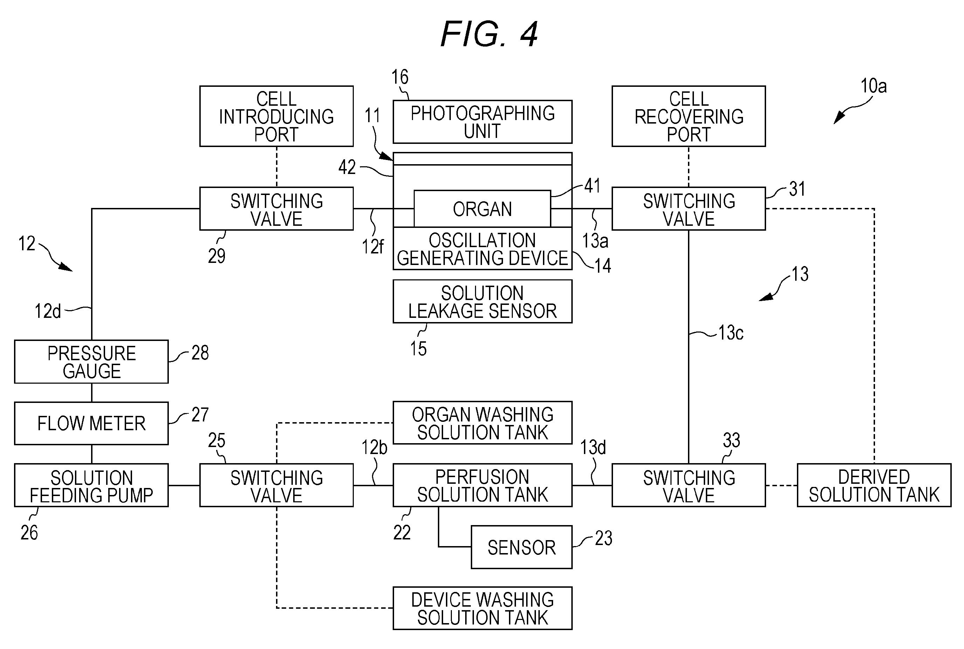

The perfusion of the organ with the perfusion solution is carried out in step S102 of Fig. 2. In step S102, as shown in Fig. 4, the flow path 12b connected to the perfusion solution tank 22 is connected to the flow path 12d by way of the switching valve 25. The flow path 12d and the flow path 12f are connected by way of the switching valve 29. The flow path 12f is connected to the artery of the organ 41 accommodated in the organ accommodating container 11. The flow path 13a is connected to the vein of the organ 41 accommodated in the organ accommodating container 11. The flow path 13a and the flow path 13c are connected by way of the switching valve 31. The flow path 13c and the flow path 13d connected to the perfusion solution tank 22 are connected by way of the switching valve 33. The flow rate of the organ washing solution and the pressure in the flow path are monitored by the flow meter 27 and the pressure gauge 28, respectively. The state, for example, pH, temperature, dissolved oxygen amount, and the like of the perfusion solution in the perfusion solution tank 22 are monitored by the sensor 23. Thus, with the solution feeding pump 26, the perfusion solution in the organ perfusion solution tank 22 is introduced into the organ 41 through the first flow path 12, and derived out from the organ through the second flow path 13. The perfusion solution derived out from the organ is then returned to the perfusion solution tank 22. In step S102, the oscillation generating device 14 applies oscillation to the organ 41 in the organ accommodating container 11. Thus, the perfusion solution can be spread and sufficiently diffused throughout the entire organ 41.

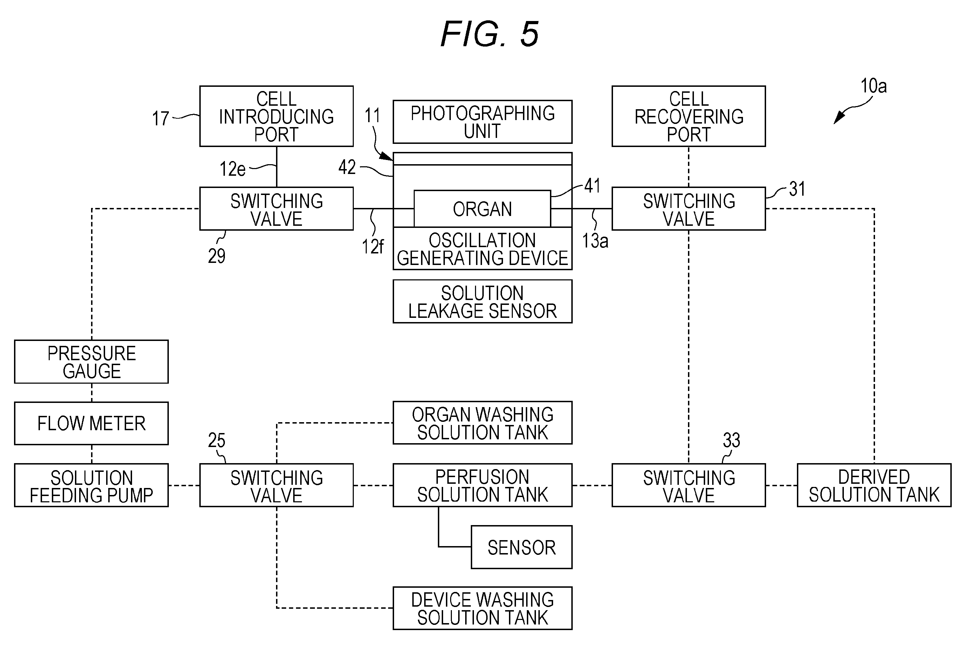

The introduction of cells into the first flow path 12 is carried out in step S103 of Fig. 2. In step S103, as shown in Fig. 5, the flow path 12e and the flow path 12f are connected by way of the switching valve 29. In this case, an opening other than the opening on the flow path 12e side and the opening on the flow path 12f side in the switching valve 29 is closed. The flow path 12f is connected to the artery of the organ 41 accommodated in the organ accommodating container 11. The flow path 13a is connected to the vein of the organ 41 accommodated in the organ accommodating container 11. An opening other than the opening on the flow path 13a side in the switching valve 31 is closed. This makes it possible to introduce cells into the perfusion system.

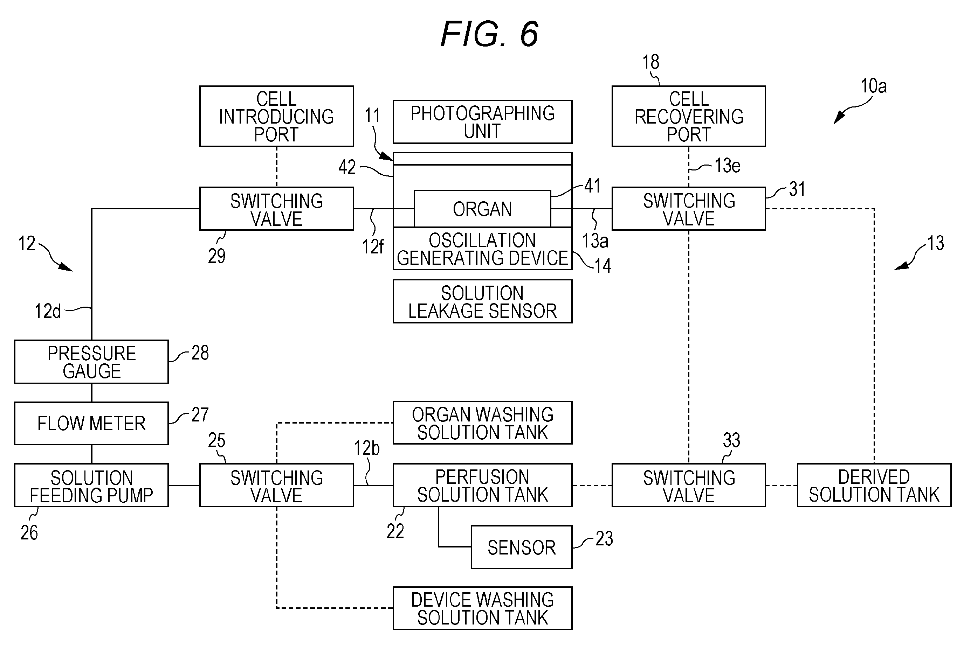

The introduction of the cells into the organ is carried out in step S104 of Fig. 2. In step S104, as shown in Fig. 6, the flow path 12b connected to the perfusion solution tank 22 is connected to the flow path 12d by way of the switching valve 25. The flow path 12d and the flow path 12f are connected by way of the switching valve 29. The flow path 12f is connected to the artery of the organ 41 accommodated in the organ accommodating container 11. The flow path 13a is connected to the vein of the organ 41 accommodated in the organ accommodating container 11. An opening other than the opening on the flow path 13a side in the switching valve 31 is closed. This makes it possible to introduce the perfusion solution together with the cells into the organ 41. The flow rate of the perfusion solution and the pressure in the flow path are monitored by the flow meter 27 and the pressure gauge 28, respectively. The state, for example, pH, temperature, dissolved oxygen amount, and the like of the perfusion solution in the perfusion solution tank 22 are monitored by the sensor 23. In step S104, the oscillation generating device 14 applies oscillation to the organ 41 in the organ accommodating container 11. The perfusion and the cells thus can be spread and sufficiently diffused throughout the entire organ 41.

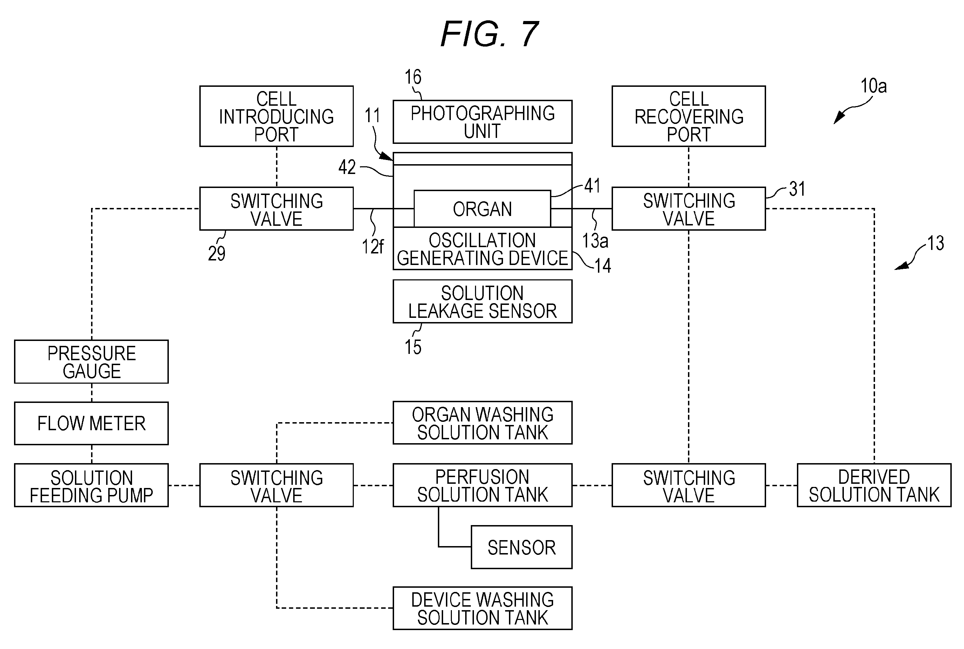

The culturing of the cells is carried out in step S105 of Fig. 2. In step S105, as shown in Fig. 7, an opening other than the opening on the flow path 12f side in the switching valve 29 is closed. An opening other than the opening on the flow path 13a side in the switching valve 31 is closed.

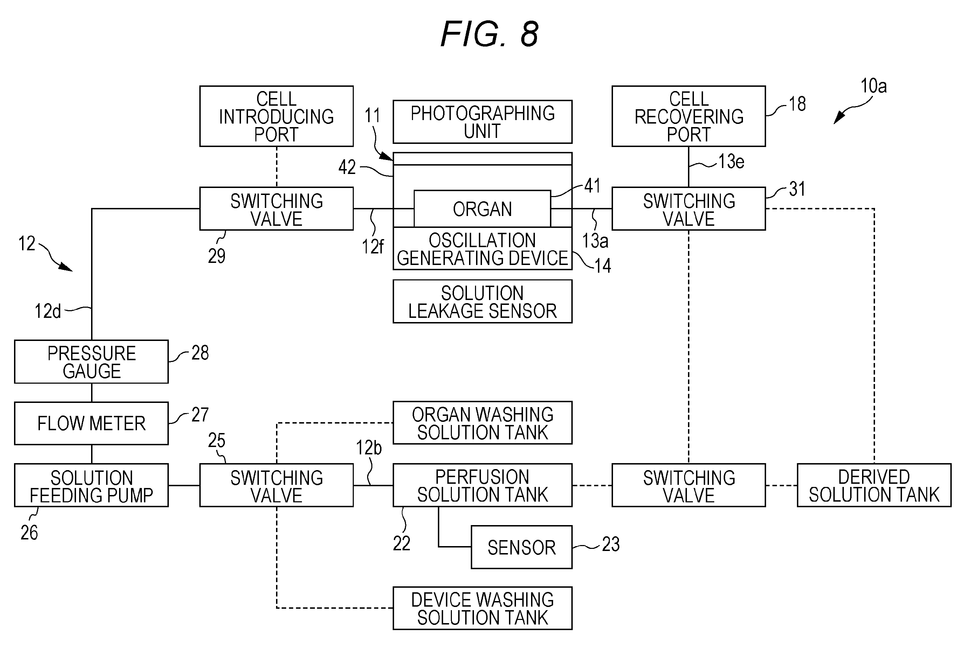

The recovery of the cells is carried out in step S106 of Fig. 2. In step S106, as shown in Fig. 8, the flow path 12b connected to the perfusion solution tank 22 is connected to the flow path 12d by way of the switching valve 25. The flow path 12d and the flow path 12f are connected by way of the switching valve 29. The flow path 12f is connected to the artery of the organ 41 accommodated in the organ accommodating container 11. The flow path 13a is connected to the vein of the organ 41 accommodated in the organ accommodating container 11. The flow path 13a and the flow path 13e are connected by way of the switching valve 31. The perfusion solution together with the cells thus can be derived out from the organ 41 and can be recovered by the cell recovering port 18. The flow rate of the perfusion solution and the pressure in the flow path are monitored by the flow meter 27 and the pressure gauge 28, respectively. The state, for example, pH, temperature, dissolved oxygen amount, and the like of the perfusion solution in the perfusion solution tank 22 are monitored by the sensor 23. In step S106, the oscillation generating device 14 applies oscillation to the organ 41 in the organ accommodating container 11. This makes it possible to sufficiently recover the cells spread throughout the entire organ 41.

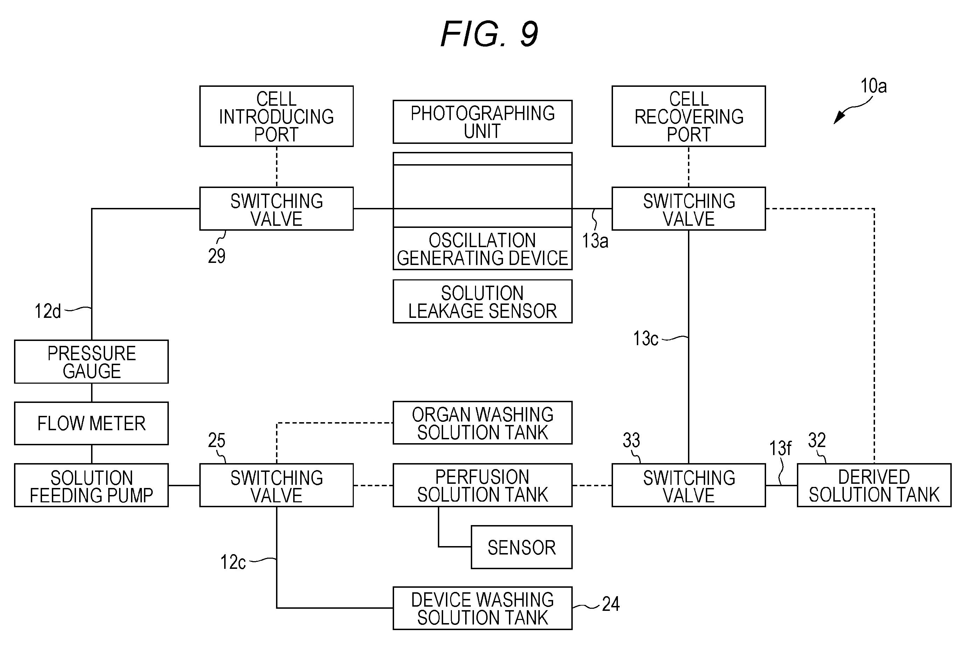

The washing of the device is carried out in step S107 of Fig. 2. At this time, the organ 41 is taken out from the organ accommodating container 11. In step S107, as shown in Fig. 9, the flow path 12c connected to the device washing solution tank 24 is connected to the flow path 12d by way of the switching valve 25. The flow path 12d and the flow path 12f are connected by way of the switching valve 29. The flow paths 12f, 13a are connected to the organ accommodating container 11. The flow path 13a and the flow path 13c are connected by way of the switching valve 31. The flow path 13c and the flow path 13f are connected by way of the switching valve 33. Thus, with the solution feeding pump 26, the device washing solution in the device washing solution tank 24 is introduced into the organ accommodating container 11 through the first flow path 12. Then, the device washing solution is derived out from the organ accommodating container 11 to the derived solution tank 32 through the second flow path 13.

The organ perfusion device according to the present embodiment can also be used for applications such as decellularization of organ, recellularization of the decellularized organ, and the like.

### EXAMPLES

### (Example 1)

### (1) Cannulation of spleen

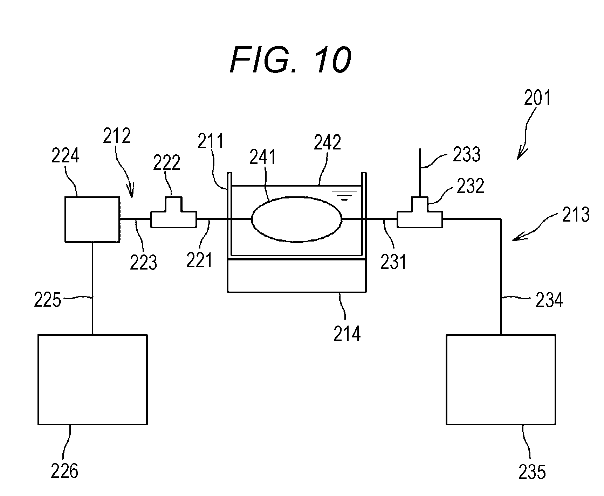

The spleen was extracted from swine (LWD swine, weight: approximately 30 kg) put under anesthesia with Ketalar. After ligating the short gastric arteriovein of the spleen, the artery of the spleen was cannulated using a tube (221 in Fig. 10) [manufactured by Atom medical Corporation, trade name: Atom multipurpose tube, outer diameter: 2.0 mm]. The vein of the spleen was cannulated using a tube (231 in Fig. 10) [manufactured by Terumo Corporation, trade name: Safeed extension tube]. Then, a 50 mL volume syringe (manufactured by Terumo Corporation) was used to introduce 100 mL of normal saline solution containing heparin (solution obtained by adding 1 mL of heparin with respect to 500 mL of normal saline solution) at a flow rate of about 20 mL/minute from the artery side to the cannulated spleen. The derivation of the normal saline solution containing heparin from the vein side was checked. After the check, the spleen was stored in cold storage at 4°C.

### (2) Perfusion of spleen

Hereinafter, the perfusion of spleen 241 was carried out using an organ perfusion device 201 shown in Fig. 10. The organ perfusion device 201 shown in Fig. 10 includes an organ accommodating container 211, a first flow path 212 for introducing a perfusion solution into an organ, a second flow path 213 for deriving the perfusion solution out from the organ, and an oscillator 214 (manufactured by As One Corporation, laboratory shaker SRR-2). The first flow path 212 includes tubes 221, 223, 225, a three-way stopcock 222 [manufactured by Terumo Corporation, trade name: TS-TR2K, type R, cock specification 360°] serving as a switching valve, a solution feeding pump 224 [manufactured by Yamato Scientific Co. Ltd., trade name: Master flex feeding pump, 07528-10], and a perfusion solution tank 226 [volume 5L, manufactured by As One Corporation, model: 2002-5000SD]. The artery of the organ and the three-way stopcock 222 were connected by way of the tube 221. The three-way stopcock 222 and the solution feeding pump 224 were connected by way of the tube 223 [manufactured by Yamato Scientific Co. Ltd., trade name: C-flex pump tube 6424-25]. The solution feeding pump 224 and the perfusion solution tank 226 were connected by way of the tube 225 [manufactured by Yamato Scientific Co. Ltd., trade name: C-flex pump tube 6424-25]. The second flow path 213 includes tubes 231, 233, 234, a three-way stopcock 232 serving as a switching valve, and a derived solution tank 235. The tube 233 [manufactured by Yamato Scientific Co. Ltd., trade name: C-flex pump tube 6424-25] serving as a cell recovering port was connected to one opening of the three-way stopcock 232 [manufactured by Terumo Corporation, trade name: TS-TR2K, type R, cock specification 360°]. The three-way stopcock 222 and the derived solution tank 235 [manufactured by Thermo Scientific, model: 2250-0020] were connected by way of the tube 223 [manufactured by Yamato Scientific Co. Ltd., trade name: C-flex pump tube 6424-25]. A normal saline solution was placed in the perfusion solution tank as a perfusion solution.

A normal saline solution 242 was placed in the organ accommodating container 211 of the oscillator 214 in the organ perfusion device 201 as a presservation solution. Then, an elastic holding body was fixed in the organ accommodating container 211 containing the normal saline solution 242. Thereafter, the spleen 241 cannulated in (1) of Example 1 was disposed on the elastic holding body in the organ accommodating container 211. Next, the three-way stopcock 222 was connected to the tube 221 on the artery side of the spleen 241. The three-way stopcock 232 was connected to the tube 231 on the vein side of the spleen 241.

The opening on the cell recovering port side in the three-way stopcock 232 on the vein side was closed, and the opening on the derived solution tank side was opened. The spleen 241 was perfused with the perfusion solution in the perfusion solution tank 226 for 60 minutes at a flow rate of 10 mL/minute using the solution feeding pump 224 while shaking the organ accommodating container 211 with the oscillator 214 at an amplitude of 45 mm and a rotation speed of 160 rpm to apply oscillation on the spleen 241. After elapse of 60 minutes from the start of perfusion, the thee-way stopcock 232 on the vein side was switched, and the perfusion solution derived out from the spleen 241 was recovered 10 mL at a time. The numbers of white blood cells, red blood cells, and blood platelets contained in the perfusion solution recovered were respectively measured using an automated hematology analyzer [manufactured by Sysmex Corporation, trade name; XT-2000iv]. A ratio (number of blood cells after elapse of 60 minutes from start of perfusion / number of blood cells before start of perfusion) of the number of white blood cells, number of red blood cells, and number of blood platelets after elapse of 60 minutes from the start of perfusion with respect to the number of white blood cells, number of red blood cells, and number of blood platelets at the start of perfusion was obtained.

### (Comparative Example 1)

### (1) Cannulation of spleen

Operations which are the same as those in Example 1 were carried out to obtain the cannulated spleen.

### (2) Perfusion of spleen

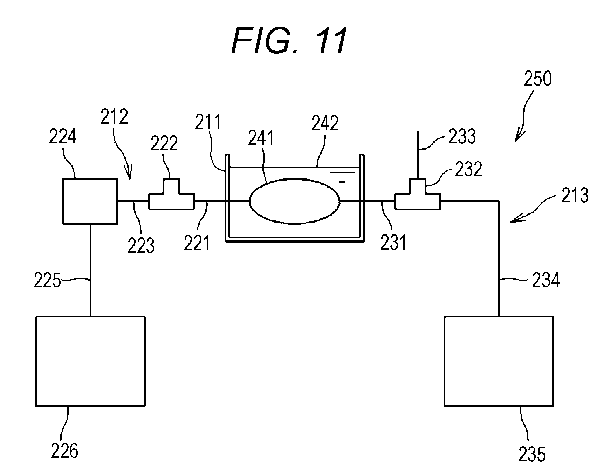

Hereinafter, the perfusion of the spleen 241 was carried out using an organ perfusion device 250 shown in Fig. 11. The organ perfusion device 250 shown in Fig. 11 has the same configuration as in the organ perfusion device 201 shown in Fig. 10 except that the oscillator 214 is not provided.

The normal saline solution 242 was placed in the organ accommodating container 211 in the organ perfusion device 201 as a presservation solution. Then, an elastic holding body was fixed in the organ accommodating container 211 containing the normal saline solution 242. Thereafter, the spleen 241 cannulated in (1) of Comparative Example 1 was disposed on the elastic holding body in the organ accommodating container 211. Next, the three-way stopcock 222 was connected to the tube 221 on the artery side of the spleen 241. The three-way stopcock 232 was connected to the tube 231 on the vein side of the spleen 241.

The opening on the cell recovering port side in the three-way stopcock 232 on the vein side was closed, and the opening on the derived solution tank side was opened. The spleen 241 was perfused with the perfusion solution in the perfusion solution tank 226 for 60 minutes at a flow rate of 10 mL/minute using the solution feeding pump 224. After elapse of 60 minutes from the start of introduction, the thee-way stopcock 232 on the vein side was switched, and the perfusion solution derived out from the spleen 241 was recovered 10 mL at a time. The numbers of white blood cells, red blood cells, and blood platelets contained in the perfusion solution recovered were respectively measured using an automated hematology analyzer [manufactured by Sysmex Corporation, trade name; XT-2000iv]. A ratio (number of blood cells after elapse of 60 minutes from start of perfusion / number of blood cells before start of perfusion) of the number of white blood cells, number of red blood cells, and number of blood platelets after elapse of 60 minutes from the start of perfusion with respect to the number of white blood cells, number of red blood cells, and number of blood platelets at the start of perfusion was obtained.

### (Results)

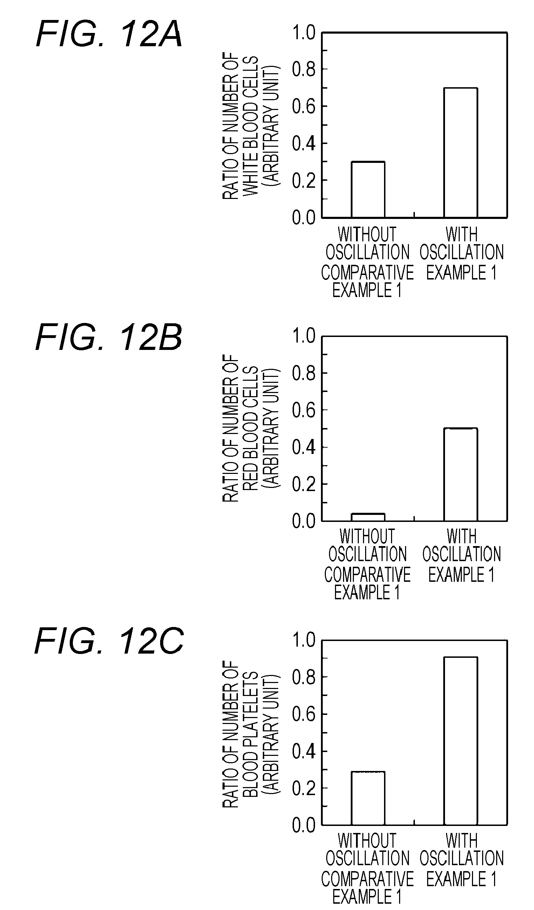

The results of Example 1 and Comparative Example 1 are shown in Figs. 12A to 12C. Fig. 12A shows the result (ratio of number of white blood cells) based on the number of white blood cells, Fig. 12B shows the result (ratio of number of red blood cells) based on the number of red blood cells, and Fig. 12C shows the result (ratio of number of blood platelets) based on the number of blood platelets.

According to the results shown in Figs. 12A to 12C, the number of white blood cells, the number of red blood cells, and the number of blood platelets in Example 1 were found to be higher than the number of white blood cells, the number of red blood cells, and the number of blood platelets in Comparative Example 1. Therefore, it was confirmed that as compared to Comparative Example 1 in which the spleen and the perfusion solution were brought into contact with each other without applying oscillation to the spleen, a greater number of cells can be recovered or removed from the organ in Example 1 in which the spleen and the perfusion solution were brought into contact with each other while applying oscillation to the spleen.

### (Example 2)

The operations which are the same as those in Example 1 were carried out except that the perfusion time was set to 120 minutes instead of setting the perfusion time to 60 minutes to carry out the perfusion. The spleen 241 was observed at the start of perfusion, as well as after elapse of 60 minutes, after elapse of 90 minutes, and after elapse of 120 minutes from the start of perfusion. Image processing software [Image J developed by National Institutes of Health] was used to obtain the area of the entire organ and the area (perfused area) of the portion where color changed by the perfusion through the binarization process of the image. Next, the proportion of the perfused area with respect to the area of the entire organ (perfused area / area of entire organ) was obtained.

### (Comparative Example 2)

The operations which are the same as those in Comparative Example 1 were carried out except that the perfusion time was set to 120 minutes instead of setting the perfusion time to 60 minutes to carry out the perfusion. The spleen 241 was observed at the start of perfusion, as well as after elapse of 60 minutes, after elapse of 90 minutes, and after elapse of 120 minutes from the start of perfusion. Image processing software [Image J developed by National Institutes of Health] was used to obtain the area of the entire organ and the area (perfused area) of the portion where color changed by the perfusion through the binarization process of the image. Next, the proportion of the perfused area with respect to the area of the entire organ (perfused area / area of entire organ) was obtained.

### (Results)

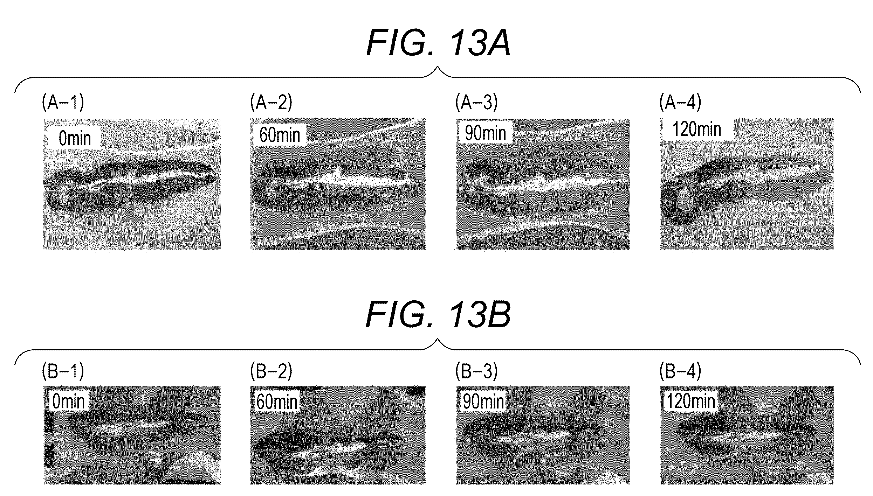

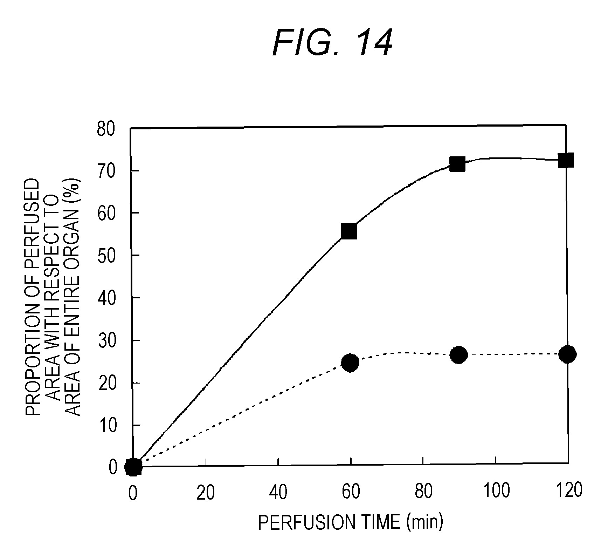

The results of Example 2 and Comparative Example 2 are shown in Figs. 13 and 14. Fig. 13A shows the results (Example s) of observing the temporal change in the spleen when the perfusion was carried out while applying oscillation to the spleen. Fig. 13B shows the results (Comparative Example 2) of observing the temporal change in the spleen when the perfusion was carried out without applying oscillation to the spleen. In the figures, (A-1) and (B-1) indicate the results of observing the spleen at the start of perfusion (0 minute), (A-2) and (B-2) indicate the results of observing the spleen after elapse of 60 minutes from the start of perfusion, (A-3) and (B-3) indicate the results of observing the spleen after elapse of 90 minutes from the start of perfusion, and (A-4) and (B-4) indicate the results of observing the spleen after elapse of 120 minutes from the start of perfusion.

Fig. 14 indicates the results of examining the relationship of the perfusion time and the proportion of the perfused area with respect to the area of the entire organ. In the figure, a black square indicates the result of examining the relationship of the perfusion time and the proportion of the perfused area with respect to the area of the entire organ in Example 2, and a black circle indicates the result of examining the relationship of the perfusion time and the proportion of the perfused area with respect to the area of the entire organ in Comparative Example 2.

It was found from the results shown in Fig. 13A that the color of the spleen changed from a dark color to a light color as a whole with elapse of time when the perfusion was carried out while applying oscillation to the spleen. It was found from the results shown in Fig. 13B that the color changed only at the area (central part of the spleen) in the spleen where perfusion was carried out with elapse of time when the perfusion was carried out without applying oscillation to the spleen. According to the results, it was confirmed that blood cells were removed from only a part of the spleen when the perfusion was carried out without applying oscillation to the spleen. It was further found from the results shown in Fig. 14 that in Example 2, the proportion of the perfused area with respect to the area of the entire organ tends to increase with elapse of perfusion time until elapse of 90 minutes from the start of perfusion. On the other hand, it was found that in Comparative Example 2, the proportion of the perfused area with respect to the area of the entire organ tends to increase with elapse of perfusion time until elapse of 60 minutes from the start of perfusion. The proportion of the perfused area with respect to the area of the entire organ in Example 2 was found to be greater than the proportion of the perfused area with respect to the area of the entire organ in Comparative Example 2. According to the results, it was confirmed that blood cells were removed from the entire spleen when the perfusion was carried out while applying oscillation to the spleen. Therefore, it was found that a wide range of cells in the organ can be removed in a short period of time by carrying out perfusion while applying oscillation to the organ.

### (Example 3)

### (1) Cannulation of spleen

The operations which are the same as those in Example 1 were carried out to obtain the cannulated spleen.

### (2) Perfusion of spleen

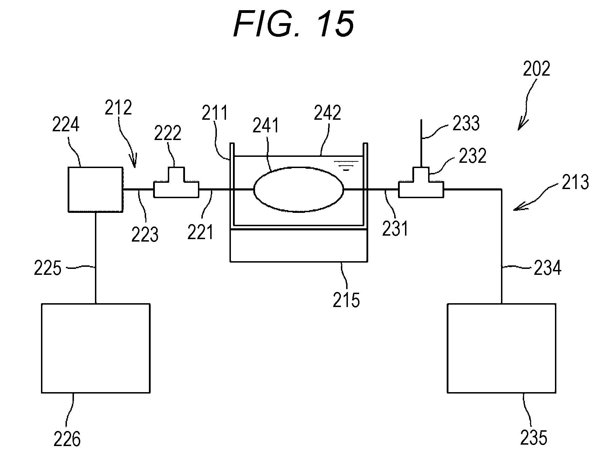

The perfusion of the spleen 241 was carried out using an organ perfusion device 202 shown in Fig. 15. The organ perfusion device 202 shown in Fig. 15 has the same configuration as in the organ perfusion device 201 shown in Fig. 10 except that an ultrasonic wave generating device 215 (USK manufactured by As One Corporation) is provided instead of the oscillator 214.

The normal saline solution 242 was placed in the organ accommodating container 211 of the organ perfusion device 202 as a presservation solution. Then, an elastic holding body was fixed in the organ accommodating container 211 containing the normal saline solution 242. Thereafter, the spleen 241 cannulated in (1) of Example 3 was disposed on the elastic holding body in the organ accommodating container 211. Next, the three-way stopcock 222 was connected to the tube 221 on the artery side of the spleen 241. The three-way stopcock 232 was connected to the tube 231 on the vein side of the spleen 241.

The opening on the cell recovering port side in the three-way stopcock 232 on the vein side was closed, and the opening on the derived solution tank side was opened. The perfusion was carried out by introducing the perfusion solution in the perfusion solution tank 226 into the spleen 241 for 30 minutes at a flow rate of 10 mL/minute using the solution feeding pump 224 while applying an ultrasonic wave to the normal saline solution in the organ accommodating container 211 with the ultrasonic wave generating device 215 to apply oscillation to the spleen 241. After elapse of 30 minutes from the start of perfusion, the thee-way stopcock 232 on the vein side was switched, and the perfusion solution derived out from the spleen 241 was recovered 10 mL at a time. The numbers of white blood cells, red blood cells, and blood platelets contained in the perfusion solution recovered were respectively measured using an automated hematology analyzer [manufactured by Sysmex Corporation, trade name; XT-2000iv]. A ratio (number of blood cells after elapse of 30 minutes from start of perfusion / number of blood cells before start of perfusion) of the number of white blood cells, number of red blood cells, and number of blood platelets after elapse of 30 minutes from the start of perfusion with respect to the number of white blood cells, number of red blood cells, and number of blood platelets at the start of perfusion was obtained.

### (Comparative Example 3)

The operations which are the same as those in Comparative Example 1 were carried out except that the perfusion time was set to 30 minutes instead of setting the perfusion time to 60 minutes, and the numbers of white blood cells, red blood cells, and blood platelets contained in the perfusion solution recovered were respectively measured. A ratio (number of blood cells after elapse of 30 minutes from start of perfusion / number of blood cells before start of perfusion) of the number of white blood cells, number of red blood cells, and number of blood platelets after elapse of 30 minutes from the start of perfusion with respect to the number of white blood cells, number of red blood cells, and number of blood platelets at the start of perfusion was obtained.

### (Results)

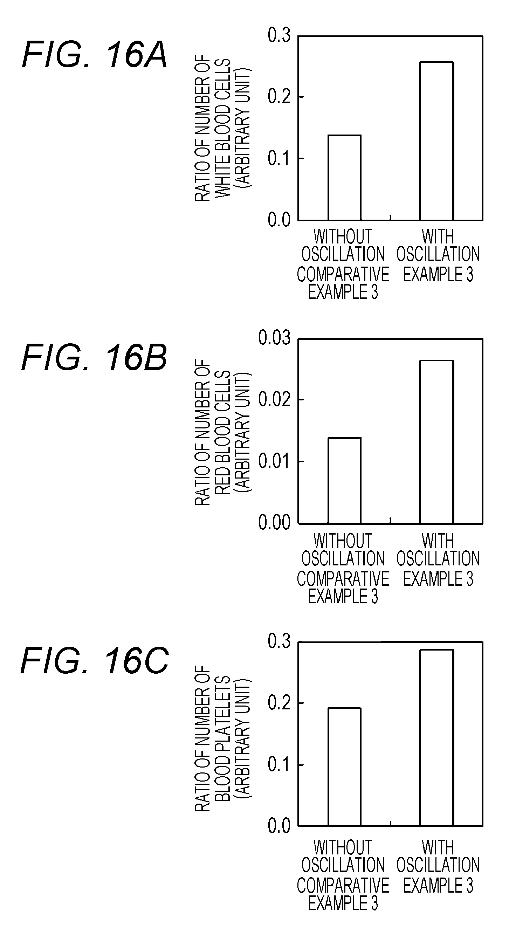

The results of Example 3 and Comparative Example 3 are shown in Figs. 16A to 16C. Fig. 16A shows the results (ratio of number of white blood cells) based on the number of white blood cells, Fig. 16B shows the results (ratio of number of red blood cells) based on the number of red blood cells, and Fig. 16C shows the results (ratio of number of blood platelets) based on the number of blood platelets.

According to the results shown in Figs. 16A to 16C, the number of white blood cells, the number of red blood cells, and the number of blood platelets in Example 3 were found to be higher than the number of white blood cells, the number of red blood cells, and the number of blood platelets in Comparative Example 3. According to the results, it was confirmed that a greater number of cells can be recovered or removed from the organ by bringing the spleen and the perfusion solution into contact with each other while applying oscillation to the spleen using the ultrasonic wave generating device.

### (Example 4)

### (1) Cannulation of spleen

The operations which are the same as those in Example 1 were carried out to obtain the cannulated spleen.

### (2) Perfusion of spleen

The normal saline solution 242 was placed in the organ accommodating container 211 of the organ perfusion device 202 shown in Fig. 11 as a presservation solution. Then, an elastic holding body was fixed in the organ accommodating container 211 containing the normal saline solution 242. Thereafter, the spleen 241 cannulated in (1) of Example 4 was disposed on the elastic holding body in the organ accommodating container 211. Next, the three-way stopcock 222 was connected to the tube 221 on the artery side of the spleen 241. The three-way stopcock 232 was connected to the tube 231 on the vein side of the spleen 241.

The opening on the cell recovering port side in the three-way stopcock 232 on the vein side was closed, and the opening on the derived solution tank side was opened. The perfusion was carried out by introducing the perfusion solution in the perfusion solution tank 226 into the spleen 241 for 60 minutes at a flow rate of 10 mL/minute using the solution feeding pump 224 while shaking the organ accommodating container 211 with the oscillator 214 at an amplitude of 45 mm and a rotation speed of 160 rpm or 240 rpm to apply oscillation to the spleen 241. At the start of perfusion and after elapse of 60 minutes from the start of perfusion, the thee-way stopcock 232 on the vein side was switched, and the perfusion solution derived out from the spleen 241 was recovered 10 mL at a time. The numbers of white blood cells, red blood cells, and blood platelets contained in the perfusion solution recovered were respectively measured using an automated hematology analyzer [manufactured by Sysmex Corporation, trade name; XT-2000iv]. In the foregoing, the operations which are the same as those described above were carried out except that the organ accommodating container 211 was not shaken, and the numbers of white blood cells, red blood cells, and blood platelets contained in the perfusion solution recovered were measured, respectively. Next, a ratio (number of blood cells after elapse of 60 minutes from start of perfusion / number of blood cells at start of perfusion) of respective number of white blood cells, number of red blood cells, and number of blood platelets after elapse of 60 minutes from the start of perfusion with respect to respective number of white blood cells, number of red blood cells, and number of blood platelets at the start of perfusion was obtained.

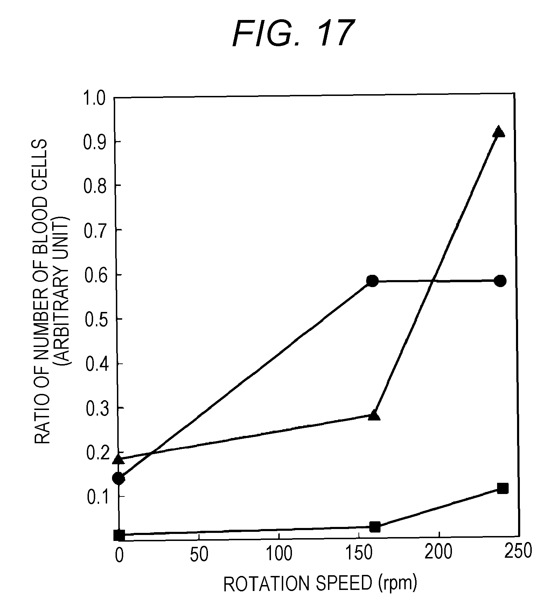

The results of examining the relationship of the rotation speed and the ratio of the number of blood cells are shown in Fig. 17. In the figure, a black circle indicates the result of examining the relationship of the rotation speed and the ratio of the number of white blood cells, a black triangle indicates the result of examining the relationship of the rotation speed and the ratio of the number of red blood cells, and a black square indicates the result of examining the relationship of the rotation speed and the ratio of the number of blood platelets.

It was found from the results shown in Fig. 17 that the ratio of the number of white blood cells, the ratio of the number of red blood cells, and the ratio of the number of blood platelets each tends to increase by increasing the rotation speed, that is, increasing the number of oscillations. Therefore, according to the results, it was confirmed that a greater number of cells can be recovered or removed from the organ by bringing the spleen and the perfusion solution into contact with each other while applying oscillation to the spleen.

## Claims

1. An organ perfusion method comprising introducing a perfusion solution into an organ extracted from a living body and deriving the perfusion solution from the organ, **characterized in that**
the organ and the perfusion solution are brought into contact with each other while applying oscillation to the organ.

2. The method according to claim 1, wherein
the organ is accommodated in a presservation solution; and
the oscillation is applied to the organ through the presservation solution.

3. The method according to claim 1 or 2, wherein
the organ is accommodated in the presservation solution in an organ accommodating container; and
the oscillation is applied to the organ by oscillating the organ accommodating container.

4. The method according to claim 1 or 2, wherein
the organ is accommodated in the presservation solution in an organ accommodating container; and
the oscillation is applied to the organ by oscillating the presservation solution with an ultrasonic wave.

5. The method according to any one of claims 1 to 4, wherein the perfusion solution comprises a cell solubilizing agent.

6. The method according to any one of claims 1 to 4, wherein the perfusion solution comprises cells.

7. The method according to claim 6, wherein the cells are undifferentiated cells.

8. The method according to any one of claims 1 to 7, wherein the organ is a decellularized organ.

9. An organ perfusion device comprising:
an organ accommodating container configured to accommodate an organ extracted from a living body;
a first flow path configured to introduce a perfusion solution into the organ accommodated in the organ accommodating container;
a second flow path configured to derive the perfusion solution out from the organ accommodated in the organ accommodating container; and
an oscillation generating device configured to apply oscillation to the organ accommodated in the organ accommodating container; wherein
the oscillation generating device applies the oscillation to the organ when the organ and the perfusion solution are brought into contact with each other.

10. The organ perfusion device according to claim 9, wherein the oscillation generating device is an oscillator that oscillates the organ accommodating container, or an ultrasonic wave generating device that generates an ultrasonic wave for oscillating the organ.

11. The organ perfusion device according to claim 9 or 10, wherein the first flow path comprises a container that contains the perfusion solution to introduce into the organ.

12. The organ perfusion device according to any one of claims 9 to 11, wherein the second flow path comprises a recovering unit that recovers fluid containing the perfusion solution derived out from the organ.

13. The organ perfusion device according to any one of claims 9 to 12, wherein the perfusion solution comprises a cell solubilizing agent.

14. The organ perfusion device according to any one of claims 9 to 13, wherein the organ is a decellularized organ.

15. The organ perfusion device according to any one of claims 9 to 15, further comprising a control unit configured to control a flow rate of the perfusion solution and operation of the oscillation generating device.
